# EUROPEAN PATENT SPECIFICATION

(11) **EP 2 256 336 B1**
(45) Date of publication and mention of the grant of the patent: **03.10.2018**
(21) Application number: 10162956.6
(22) Date of filing: 17.05.2010
(51) Int. Cl.: F02N 3/04, F02N 11/10, B60R 25/00, B62H 1/02, B62L 3/06, B62H 5/08

(54) **Motorcycle**
Motorrad
Motocyclette

(30) Priority: 18.05.2009 JP 2009120117
(43) Date of publication of application: 01.12.2010
(73) Proprietor: Yamaha Hatsudoki Kabushiki Kaisha, Iwata-shi, Shizuoka-ken 438 (JP)
(72) Inventor: Sakurai, Hitoshi, Shizuoka-ken 438-8501 (JP)
(74) Representative: Zimmermann, Tankred Klaus

(56) References cited:
- CN-A- 101 172 516
- DE-A1- 19 903 148
- JP-A- H02 181 071
- JP-A- S56 103 622
- US-A1- 2005 076 877
- US-A1- 2009 242 307

## Description

### BACKGROUND OF THE INVENTION

### Field of the Invention

The present invention generally relates to motorcycles. The invention more particularly relates to a motorcycle capable of starting an engine with a kick starter.

### Description of the Background Art

There have been known motorcycles including kick starters. In the motorcycle of this kind, a shaft connected with the kick lever is forcedly rotated by the operation of a kick lever. The rotation of the shaft drives the engine.

For example, JP 05-180127 A discloses a scooter that can be kick-started. The scooter disclosed by JP 05-180127 A includes an engines unit, a shaft arranged in the engine unit, and a kick lever arranged outside the engine unit. The scooter further includes a main stand. The driver can turn the main stand upward until it is in a stored state so that a driving wheel can touch the road surface. The driver can turn the main stand downward and lift the driving wheel up from the road surface.

In the scooter disclosed by JP 05-180127 A, when the main stand is stored, in other words, when the vehicle can travel, the rotation trajectory of the kick lever and a part of the main stand interfere with each other. When the main stand is in a stored state, the start of the engine can be limited by the mechanical structure, which however will restrict more or less the arrangement and the structure of the kick lever.

JP S56 103622 discloses a device preventing kick starting, should the brake be not activated.

### SUMMARY OF THE INVENTION

It is an object of the invention to provide a motorcycle capable of controlling a starting of its engine without restricting the arrangement and structure of the kick lever.

This object is achieved by a motorcycle according to claim 1.

A motorcycle according to a preferred embodiment of the present invention includes an engine, a wheel driven by the engine, a brake that acts on the wheel, a brake lock device, and a brake lock detector. The brake lock device locks the brake in a braked state. The brake lock detector detects that the brake is locked in a braked state by the brake lock device. The motorcycle according to the present preferred embodiment further includes a kick starter that forces a crankshaft of the engine to rotate. The motorcycle according to the present preferred embodiment prohibits the engine from being driven when the operation of starting the engine is carried out by the kick starter and the brake lock detector does not detect that the brake is locked in a braked state.

The mechanism of prohibiting the start of the engine by the kick starter does not restrict the mechanical structure of the kick lever. This increases the flexibility in the layout design of the motorcycle in the periphery of the engine. The kick lever can be provided in an appropriate position that allows the driver to easily carry out kick-starting. According to the present preferred embodiment, the kick lever can be provided in an appropriate position and the start of the engine by the kick starter can be prohibited under appropriate conditions.

Other features, elements, steps, characteristics and advantages of the present invention will become more apparent from the following detailed description of the preferred embodiments of the present invention with reference to the attached drawings.

### BRIEF DESCRIPTION OF THE DRAWINGS

Fig. 1 is a left side view of a motorcycle according to a preferred embodiment of the present invention.
Fig. 2 is a sectional view of an internal structure of an engine unit.
Fig. 3 is a sectional view of the engine unit showing a secondary shaft and a peripheral structure of a clutch.
Fig. 4 is a partially sectional view of the engine unit showing a kick starter and an engine starter motor.
Fig. 5 is a plan view of a handle.
Fig. 6A is a plan view of a left handle.
Fig. 6B is a front view of the left handle.
Fig. 6C is a rear view of the left handle.
Fig. 7A is a view showing a state of how brake locking operation is carried out by a driver.
Fig. 7B is a view showing a state of how a pin is fixed in a brake locked position.
Fig. 8 is a control block diagram of a motorcycle.
Fig. 9 is a block diagram showing a function structure of a controller.
Fig. 10 is a view of a display panel.
Fig. 11 is a chart showing a procedure of starting an engine by a kick starter.
Fig. 12 is a chart showing a procedure of starting the engine by an engine starter.

### DETAILED DESCRIPTION OF THE PREFERRED EMBODIMENTS

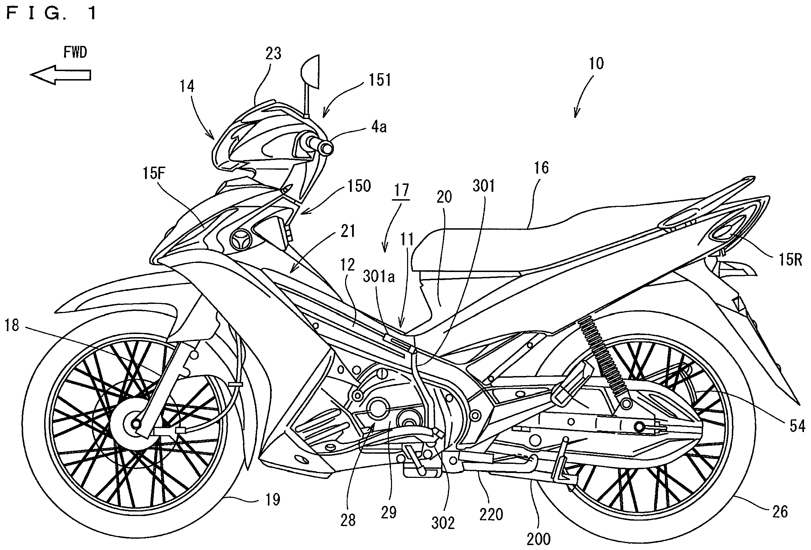

A motorcycle 10 according to a preferred embodiment of the present invention will be described in conjunction with the accompanying drawings. Fig. 1 is a left side view of the motorcycle 10 according to the present preferred embodiment. The motorcycle 10 includes a vehicle body frame 11. A seat 16 is provided above the vehicle body frame 11. The motorcycle 10 is a so-called moped type motorcycle. The motorcycle 10 has a downwardly concave region 17 in front of the seat 16. Note that the term "moped type" simply represents a kind of vehicle shape and does not limit the maximum speed, the displacement, and the like or the size of the vehicle.

The motorcycle according to the present invention may be other kinds of motorcycles such as a motorcycle and a scooter provided with a fuel tank in front of the seat instead of the moped type motorcycle.

In the following description, the front-back direction or the left-right direction refer to these directions with respect to the advancing direction of the motorcycle 10 unless otherwise specified. More specifically, in the following description, the forward direction seen from a driver on the seat is the forward direction of the motorcycle 10 and the left-right direction seen from the driver on the seat is the left-right direction of the motorcycle 10. The vehicle widthwise direction is the same as the left-right direction. In the drawings, the arrow FWD indicates the forward direction of the vehicle 10. In the drawings, the arrows L and R indicate the left and the right of the motorcycle 10.

A steering head pipe that is not shown is provided at a front of the motorcycle 10. The main frame 12 is connected to a back of the steering head pipe. The main frame 12 extends backward and downward. The left and right seat frames (not shown) are connected to a middle part of the main frame 12 and extend backward and upward. The steering head pipe, the main frame 12, the seat frames and the like form the vehicle body frame 11.

An upper part and left and right parts of the vehicle body frame 11 are covered with a vehicle body cover 21. The downwardly concave region 17 is formed above the vehicle body cover 21 and in front of the seat 16.

A front fork 18 that extends downward is connected to left and right of the steering head pipe. A front wheel 19 is supported at a lower end of the front fork 18. The seat 16 and a fuel tank 20 are supported at an upper portion of the seat frames. The seat 16 is provided above the fuel tank 20. The fuel tank 20 is provided above the seat frames and covered with the vehicle body cover 21 and the seat 16.

An engine unit 28 is supported at the vehicle body frame 11. The engine unit 28 is provided under the main frame 12. A rear wheel 26 provided at a rear part of the vehicle body is driven based on the output of the engine unit 28. The front wheel 19 provided at a front part of the vehicle body is a non-driven wheel.

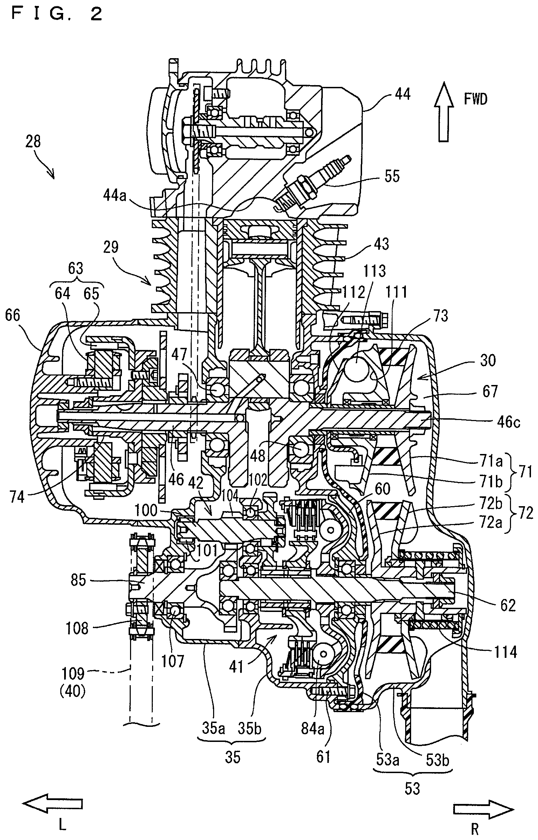

Fig. 2 is a sectional view of the engine unit 28. As shown in Fig. 2, the engine unit 28 includes an engine 29, a CVT (Continuously Variable Transmission) 30, a centrifugal clutch 41, and a deceleration mechanism 42. The type of the engine 29 is not particularly limited. The method of cooling the engine 29 may be water cooling or air cooling. The engine 29 according to the present preferred embodiment is a four-cycle single cylinder engine.

The engine 29 includes a transmission case 35, a cylinder 43 connected to the transmission case 35, and a cylinder head 44 connected to the cylinder 43. The transmission case 35 is divided into two cases, i.e., a first case 35a positioned on the left side and a second case 35b positioned on the right side. The first case 35a and the second case 35b are joined at a joint that extends in the front-back direction.

A crankshaft 46 is provided in the transmission case 35. The crankshaft 46 extends in the vehicle widthwise direction. The crankshaft 46 is provided substantially horizontally. The crankshaft 46 is supported at the first case 35a through a bearing 47 and at the second case 35b through a bearing 48.

The cylinder head 44 is provided with an ignition plug 55. Exhaust gas from fuel burnt in a combustion chamber 44a provided under the cylinder head 44 is discharged to the outside of the engine 29 through an exhaust pipe that is not shown. The exhaust pipe is connected to a muffler 54 provided on a right side of the rear wheel 26 (Fig. 1). Exhaust gas is discharged to an outside of the motorcycle 10 from the muffler 54.

A generator case 66 is detachably provided on a left side of the first case 35a. A generator 63 is provided in the generator case 66. A belt case 53 is attached on a right side of the second case 35b. The CVT 30 is provided in the belt case 53.

A clutch cover 60 is provided at a back of the second case 35b. The clutch cover 60 is attached to the second case 35b by a bolt 61.

The belt case 53 has an inside case 53a that covers the inner side (left side) of the CVT 30 in the vehicle widthwise direction and an outside case 53b that covers the outer side (right side) of the CVT 30 in the vehicle widthwise direction. The inside case 53a is attached on the right side of the transmission case 35. The outside case 53b is attached on the right side of the inside case 53a. A belt chamber 67 used to store the CVT 30 is formed by the space surrounded by the inside case 53a and the outside case 53b.

The right end of the crankshaft 46 is arranged to penetrate through the second case 35b and the inside case 53a and extend to the belt chamber 67. The primary sheave 71 of the CVT 30 is attached on a right end of the crankshaft 46. The primary sheave 71 rotates according to the rotation of the crankshaft 46. A right side part of the crankshaft 46 forms a primary shaft 46c.

A left end of the crankshaft 46 is arranged to penetrate through the first case 35a and extend in the generator case 66. The generator 63 is attached at a left end of the crankshaft 46. The generator 63 includes a stator 64 and a rotor 65 opposed to the stator 64. The rotor 65 is fixed to a sleeve 74 rotated together with the crankshaft 46. The stator 64 is fixed to the generator case 66.

A secondary shaft 62 substantially parallel to the crankshaft 46 is provided in a back in the transmission case 35.

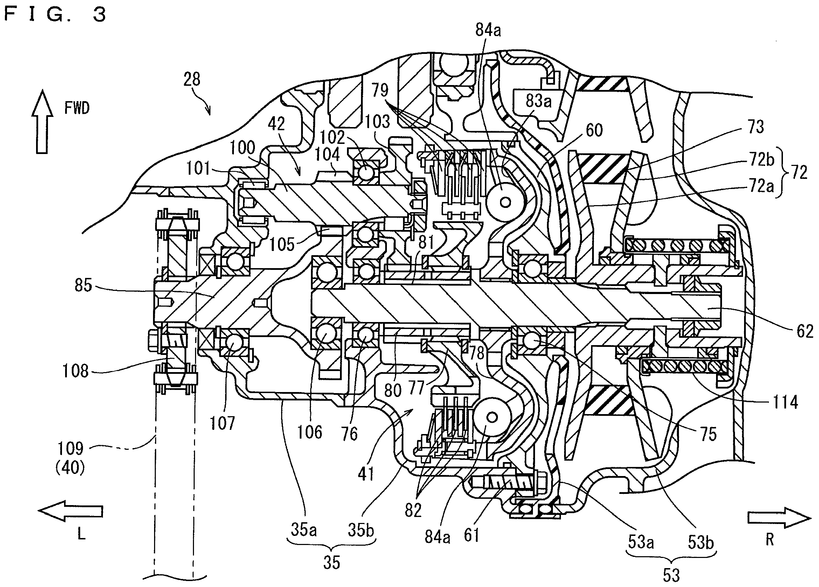

Fig. 3 is a sectional view of the engine unit 28 showing the peripheral structure of the secondary shaft 62 and the clutch 41. As shown in Fig. 3, a part of the secondary shaft 62 close to the center is supported at the clutch cover 60 through a bearing 75. A left end part of the secondary shaft 62 is supported at the second case 35b through a bearing 76. A right end of the secondary shaft 62 is arranged to penetrate through the second case 35b and the clutch cover 60 and extend to the belt chamber 67. The secondary sheave 72 of the CVT 30 is attached to a right end of the secondary shaft 62.

As shown in Fig. 2, the CVT 30 includes the primary sheave 71 attached at the right end of the crankshaft 46 (primary shaft 46c) and the secondary sheave 72 attached to the right end of the secondary shaft 62. A V belt 73 is wounded around the primary sheave 71 and the secondary sheave 72.

As shown in Fig. 2, the primary sheave 71 includes a fixed sheave 71a and a movable sheave 71b. The fixed sheave 71a is fixed to a right end of the primary shaft 46c and rotates together with the primary shaft 46c. The movable sheave 71b is provided opposed to the fixed sheave 71a. The movable sheave 71b is attached slidably at the primary shaft 46c. The movable sheave 71b rotates together with the primary shaft 46c and can slide in the axial direction of the primary shaft 46c. The V belt 73 is provided between the fixed sheave 71a and the movable sheave 71b provided opposed to each other. A cam surface 111 is formed at a left side part of the movable sheave 71b. A cam plate 112 is provided on a left side of the cam surface 111. A roller weight 113 is provided between the cam surface 111 of the movable sheave 71b and the cam plate 112.

As shown in Fig. 3, the secondary sheave 72 includes a fixed sheave 72a and a movable sheave 72b. The movable sheave 72b is attached to a right end of the secondary shaft 62. The movable sheave 72b rotates together with the secondary shaft 62 and can slide in the axial direction of the secondary shaft 62. A compression coil spring 114 is provided at a right end of the secondary shaft 62. The movable sheave 72b is subjected to leftward force from the compression coil spring 114. A cylindrical slide collar is formed at the axial center of the fixed sheave 72a and spline-connected to the secondary shaft 62.

The deceleration ratio for the CVT 30 is determined based on the relation in magnitude between the force of the roller weight 113 pushing the movable sheave 71b of the primary sheave 71 to the right and the force of the compression coil spring 114 pushing the movable sheave 72b of the secondary sheave 72 to the left.

When the rotation speed of the primary shaft 46c increases, the roller weight 113 is subjected to centrifugal force and moves to the outer side in the radial direction to push the movable sheave 71b to the right. The rightward movement of the movable sheave 71b moves the V belt 73 to the radially outer side of the primary sheave 71. As the V belt 73 moves to the radially outer side of the primary sheave 71, the V belt 73 moves to the radially inner side of the secondary sheave 72. The movable sheave 72b of the secondary sheave 72 moves to the right against the pressure of the compression coil spring 114. The V belt 73 moves to the radially outer side of the primary sheave 71 while the V belt 73 moves to the radially inner side of the secondary sheave 72, so that the reduction ratio is reduced.

The rotation speed of the primary shaft 46c is reduced, and the centrifugal force upon the roller weight 113 is reduced. The roller weight 113 moves to the radially inner side along the cam surface 111 of the movable sheave 71b and the cam plate 112. In this way, the force of the roller weight 113 pushing the movable sheave 71b to the right is reduced. As the force of the roller weight 113 pushing the movable sheave 71b is reduced, the pressure on the movable sheave 72b by the compression coils spring 114 relatively increases. By the function, the movable sheave 72b moves to the left, and the V belt 73 moves to the radially outer side of the secondary sheave 72. As the V belt 73 moves to the radially outer side of the secondary sheave 72, the V belt 73 moves to the radially inner side of the primary sheave 71, and the movable sheave 71b moves to the left. The V belt 73 moves to the radially inner side of the primary sheave 71, while the V belt 73 moves to the radially outer side of the secondary sheave 72, so that the reduction ratio increases.

As shown in Fig. 3, the centrifugal clutch 41 is attached to a left side part of the secondary shaft 62. The centrifugal clutch 41 is a multiple plate wet clutch. The centrifugal clutch 41 includes an approximately cylindrical clutch housing 78 and a clutch boss 77. The clutch housing 78 is spline-coupled to the secondary shaft 62 and rotates together with the secondary shaft 62. A plurality of ring shaped clutch plates 79 are attached to the clutch housing 78. The clutch plates 79 are arranged at intervals in the axial direction of the secondary shaft 62.

A cylindrical first gear 80 is attached rotatably around a left side part of the secondary shaft 62 through a bearing 81. The clutch boss 77 is provided on the radially inner side of the clutch plates 79 and on the radially outer side of the first gear 80. A gear formed in the axial center of the clutch boss 77 engages with the first gear 80 and the first gear 80 rotates together with the clutch boss 77. A plurality of ring-shaped friction plates 82 are attached on the radially outer side of the clutch boss 77. The friction plates 82 are arranged at intervals in the axial direction of the secondary shaft 62. The friction plates 82 are provided among adjacent clutch plates 79. The centrifugal clutch 41 is not limited to the multiple plate type. The centrifugal clutch 41 may include one clutch plate 79 and one friction plate 82. A dry clutch may be employed.

As shown in Fig. 3, the deceleration mechanism 42 is provided between the centrifugal clutch 41 and an output shaft 85. The deceleration mechanism 42 has a speed change shaft 100. The speed change shaft 100 is provided substantially parallel to the secondary shaft 62 and the output shaft 85. The speed change shaft 100 is supported rotatably at the first case 35a through a bearing 101. The speed change shaft 100 is supported rotatably at the second case 35b through a bearing 102. A second gear 103 engaged with the first gear 80 is provided at a right end of the speed change shaft 100.

A third gear 104 having a smaller size than the second gear 103 is provided in a center of the speed change shaft 100. A fourth gear 105 to be engaged with the third gear 104 is formed at an outer circumference of a right end of the output shaft 85. A right end of the output shaft 85 is rotatably supported at the secondary shaft 62 through a bearing 106. The output shaft 85 is provided rotatably at the secondary shaft 62 through the bearing 106. The output shaft 85 is provided coaxially with the secondary shaft 62. A central part of the output shaft 85 is supported rotatably at the first case 35a through a bearing 107.

In this way, the clutch boss 77 and the output shaft 85 are coupled through the first gear 80, the second gear 103, the speed change shaft 100, the third gear 104, and the fourth gear 105. The output shaft 85 rotates according to the rotation of the clutch boss 77.

The rotation driving force of the crankshaft 46 is transmitted to the clutch housing 78 through the CVT 30. The rotation speed of the clutch housing 78 changes in response to the rotation speed of the crankshaft 46. The centrifugal clutch 41 transmits or disconnects the rotation driving force output from the crankshaft 46 to or from the rear wheel 26 in response to the rotation speed of the crankshaft 46.

A plurality of cam surfaces 83a is formed on a left side of the clutch housing 78. A roller weight 84a is provided between the cam surface 83a and the clutch plate 79 provided on the rightmost side. The state of the centrifugal clutch 41 is switched between the connected state and the disconnected state depending on the magnitude of the centrifugal force acting on the roller weight 84a.

When the rotation speed of the clutch housing 78 reaches a prescribed speed or more, the roller weight 84a is subjected to centrifugal force and moves to the radially outer side. The clutch plate 79 is pushed to the left by the roller weight 84a. As a result, friction force between the clutch plates 79 and the friction plates 82 increases, and the driving force of the secondary shaft 62 is transmitted to the output shaft 85 through the centrifugal clutch 41. In this way, the centrifugal clutch 41 attains a connected state.

When the rotation speed of the clutch housing 78 is less than a prescribed speed, the centrifugal force acting on the roller weight 84a is reduced and the roller weight 84a moves to the radially inner side. As a result, the distance between the clutch plates 79 and the friction plates 82 increases, so that the driving force of the secondary shaft 62 is not transmitted to the output shaft 85. In this way, the centrifugal clutch 41 attains a disconnected state. Note that in Fig. 3, the rear part of the centrifugal clutch 41 indicates a connected state and the front part indicates a disconnected state for ease of illustration.

The left end of the output shaft 85 is penetrated through the first case 35a and projects to the outside of the transmission case 35. A drive sprocket 108 is attached to a left end of the output shaft 85. A chain 109 as a power transmission mechanism 40 used to transmit the rotation driving force of the output shaft 85 to the rear wheel 26 is wound around the drive sprocket 108. The power transmission mechanism 40 is not limited to the chain 109 but it may be a different kind of element such as a transmission belt, a gear mechanism including a combination of multiple gears, and a drive shaft.

In this way, the rotation driving force of the crankshaft 46 of the engine 29 is transmitted to the CVT 30. The rotation speed of the crankshaft 46 is decelerated at the CVT 30 and the driving force is transmitted to the centrifugal clutch 41. The centrifugal clutch 41 transmits or disconnects the rotation driving force of the crankshaft 46 according to the rotation speed of the secondary shaft 62. When the rotation speed of the secondary shaft 62 is not less than a prescribed speed, the centrifugal clutch 41 transmits the rotation driving force of the secondary shaft 62 to the power transmission mechanism 40. The rotation driving force of the engine 29, in other words, the rotation driving force of the crankshaft 46 is transmitted to the rear wheel 26 through the power transmission mechanism 40. The motorcycle 10 travels based on the rotation of the rear wheel 26.

The engine unit 28 is not limited to the above-described structure. In the path for transmitting the rotation driving force from the crankshaft 46 to the rear wheel 26, the side of the crankshaft 46 is the upstream side and the side of the rear wheel 26 is the downstream side. The centrifugal clutch 41 may be provided on the upstream side of the CVT 30. In this case, the rotation driving force of the crankshaft 46 is transmitted to the CVT 30 through the centrifugal clutch 41. The clutch is not limited to the centrifugal clutch. The clutch needs only connect or disconnect the power transmission path to the rear wheel 26 from the crankshaft 46 depending on the rotation speed of the crankshaft 46. The deceleration mechanism is not limited to the CVT and it is only necessary that the mechanism has its deceleration ratio changed automatically depending on the rotation speed of the crankshaft 46.

The CVT 30 according to the present preferred embodiment is not a deceleration mechanism that changes the speed change ratio stepwise but continuously changes the speed change ratio. According to the present preferred embodiment, the centrifugal clutch 41 automatically transmits or disconnects the rotation driving force of the crankshaft 46 depending on the rotation speed of the crankshaft 46. Therefore, the CVT 30 according to the present preferred embodiment does not have a neutral position.

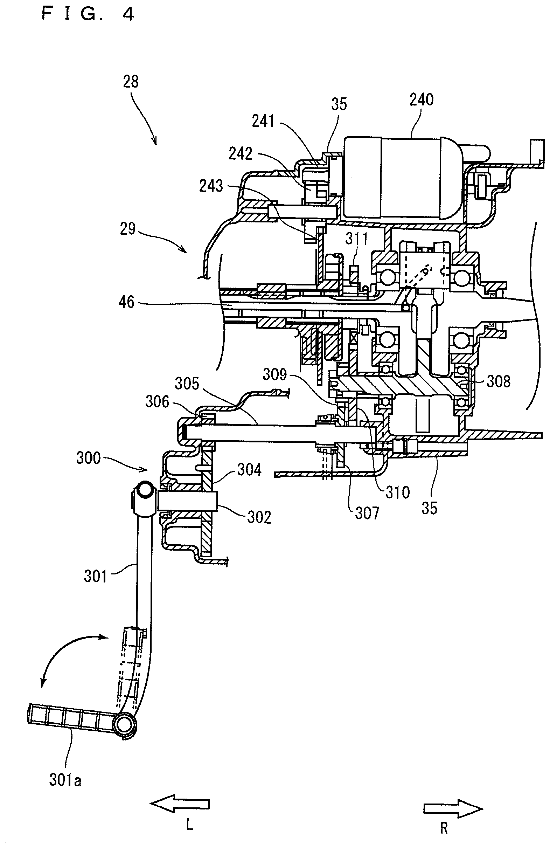

Now, a method of starting the engine 29 will be described. Fig. 4 is a partially sectional view of the engine unit 28 showing a kick starter 300 and an engine starter. As shown in Fig. 4, the engine unit 28 is provided with the kick starter 300. The driver can operate the kick starter 300 to start the engine 29.

The kick starter 300 includes a kick lever 301, a first shaft 302, a second shaft 305, and a third shaft 308. The kick lever 301 is attached to the first shaft 302. The first shaft 302 is provided with a gear 304. The second shaft 305 is provided substantially parallel to the first shaft 302. A gear 306 is provided at the second shaft 305. The gear 304 is engaged with the gear 306. The second shaft 305 is further provided with a gear 307. The third shaft 308 is provided substantially parallel to the second shaft 305. The third shaft 308 is provided with gears 309 and 310. The gear 307 is engaged with the gear 309. The third shaft 308 is provided substantially parallel to the crankshaft 46. The crankshaft 46 is provided with a gear 311. The gear 310 and the gear 311 are engaged with each other. In this way, the rotation driving force of the first shaft 302 is transmitted to the crankshaft 46 through the second shaft 305 and the third shaft 308. The operation of the driver forces the first shaft 302 to rotate. As the driver pushes the kick lever 301 by the leg to rotate, the first shaft 302 rotates together with the kick lever 301.

The kick lever 301 can rotate around the first shaft 302. A kick pedal 301a is attached rotatably at an end of the kick lever 301. The kick pedal 301a can be rotated until it is in a stored state in which it extends in the front-back direction or the vertical direction or in a startable state in which it extends in the vehicle widthwise direction. In Fig. 1, the kick pedal 301a is in a stored state. The kick lever 301 can rotate around the first shaft 302 at least when the kick pedal 301a is in a startable state.

The kick pedal 301a is arranged not to interfere with any part of the vehicle when the state changes between the stored state and startable state. The kick lever 301 is arranged not to interfere with any part of the vehicle when it rotates in response to the driver's operation.

As shown in Fig. 1, a side stand 220 rotates upwardly to attain a stored state. When the side stand 220 is stored, the kick lever 301 can rotate around the first shaft 302 without interfering with a side stand 220. When the side stand 220 turns downward and contacts the road surface, the side stand 220 supports the vehicle body of the motorcycle 10. Also in this state, the kick lever 301 can rotate around the first shaft 302 without interfering with the side stand 220.

As shown in Fig. 1, the main stand 200 rotates upwardly to attain a stored state. When the main stand 200 is stored, the kick lever 301 can rotate around the first shaft 302 without interfering with the main stand 200. When the main stand 200 turns downward and contacts the road surface, the main stand 200 supports the vehicle body of the motorcycle 10 while the rear wheel 26 is lifted up from the road surface. Also in this state, the kick lever 301 can rotate around the first shaft 302 without interfering with the main stand 200. The motorcycle 10 does not need a structure for mechanically limiting the rotation of the kick lever 301, so that the vehicle body structure is simplified.

According to the present preferred embodiment, the kick lever 301 is provided on the left side of the vehicle body of the motorcycle 10. The kick lever 301 may be provided on the right side of the vehicle body of the motorcycle 10. The position of arranging the first shaft 302 with respect to the crankshaft 46 is not particularly limited. The first shaft 302 may be provided in a position apart from the crankshaft 46 in the front-back or vertical direction. As will be described, according to the present preferred embodiment, the start of the engine 29 by the kick starter 300 is restricted by electrical control. The kick lever 301 and the first shaft 302 can be provided in a location that allows the driver to easily carry out kicking operation.

As shown in Fig. 4, the engine unit 28 is provided with the engine starter motor 240. The rotation of the engine starter motor 240 is transmitted to the crankshaft 46 through gears 241, 242, and 243. The driver operates the engine starter to drive the engine starter motor 240. The engine 29 is driven based on the driving of the engine starter motor 240.

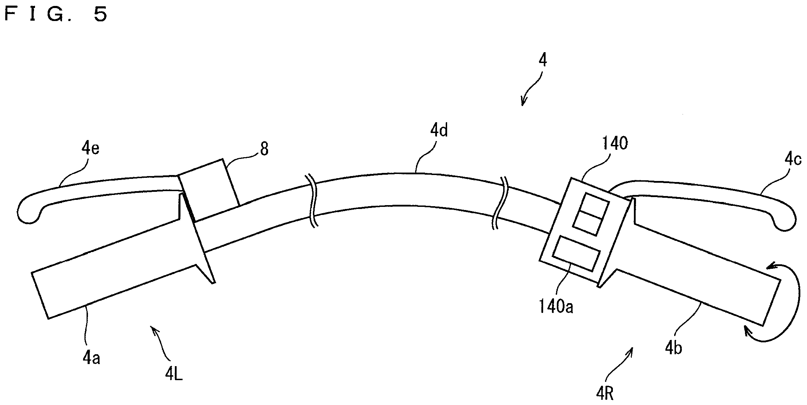

Now, the peripheral structure of the brake of the motorcycle 10 will be described. Fig. 5 is a plan view of a handle 4. The handle 4 includes a handle bar 4d connected to a steering head pipe (not shown). A left grip 4a is provided at a left end of the handle bar 4d. A right grip 4b is provided at a right end of the handle bar 4d. The right grip 4b is rotatable to the handle bar 4d. The opening degree of a throttle valve (not shown) provided at the engine 29 is adjusted based on the rotation of the right grip 4b.

A brake lever 4e is provided near the left grip 4a. A brake lever 4c is provided near the right grip 4b. The left handle 4L is formed by the left grip 4a, the brake lever 4e and the like. The right handle 4R is formed by the right grip 4b, the brake lever 4c and the like.

A switch box 140 is provided on a left side of the right grip 4b. The switch box 140 has an engine switch 140a. The driver operates the engine switch 140a, so that the engine starter motor 240 is driven and the engine 29 is driven. The engine switch 140a is made waterproof. The waterproof engine switch 140a is useful in starting the engine 29 for example in rainy weather.

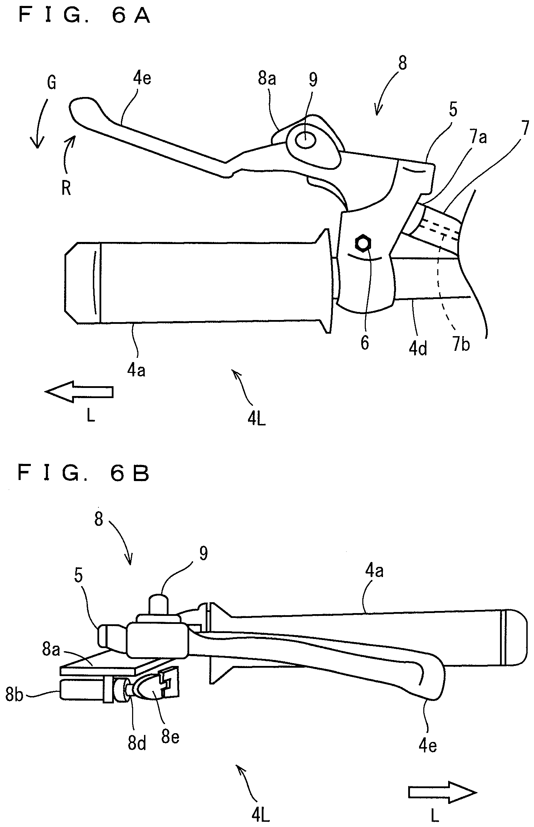

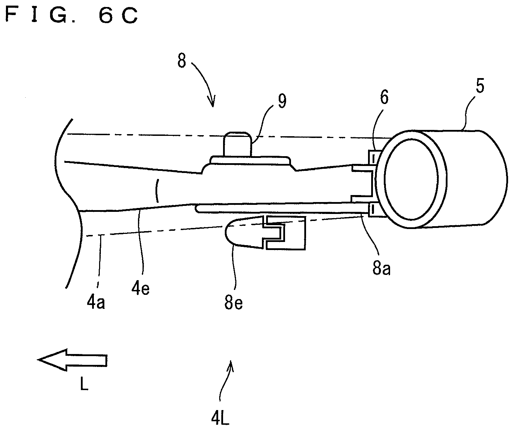

Now, with reference to Figs. 6A to 6C, a structure of the left handle 4L will be described. Fig. 6A is a plan view of the left handle 4L. Fig. 6B is a front view of the left handle 4L. Fig. 6C is a rear view of the left handle 4L. As shown in Fig. 6A, an arm 5 is fixed to the handle bar 4d. The brake lever 4e is attached to the arm 5 by a bolt 6. The brake lever 4e can rotate in the direction of the arrow G or R around the bolt 6. The rotation width in the direction of the arrow G or R is adjusted suitably for braking operation. A cable 7 is attached to the arm 5 through an attachment portion 7a. A wire 7b is provided in the cable 7. When the brake lever 4e turns in the direction of the arrow G, the wire 7b in the cable 7 is pulled to the side of the brake lever 4e, so that a rear wheel brake 402 is applied on the rear wheel 26.

The use of the wire is an example of the arrangement for applying the brake on the rear wheel 26. Hydraulic pressure may be used as an arrangement to apply the brake on the rear wheel 26. When hydraulic pressure is used, the motorcycle 10 must have components such as a master cylinder having liquid enclosed therein and a tube through which the liquid in the master cylinder is made to flow. This also applies to the front wheel 19. Hydraulic pressure may be used in an arrangement for braking the front wheel 19.

As shown in Fig. 6A, a brake lock device 8 is attached to the left handle 4L. The braking lock device 8 is a device used to keep the rear wheel 26 in a braked state. As shown in Figs. 6B and 6C, the brake lock device 8 has a hinge lever 8e and a pin 9. The hinge lever 8e pushes the switch lever 8d by the operation of the pin 9. The switch lever 8d pushed by the hinge lever 8e is pushed into the switch case 8b.

The driver rotates the brake laver 4e in the direction of the arrow G shown in Fig. 6A. The brake lever 4e rotates round the bolt 6 in the direction of the arrow G, so that the distance between the brake lever 4e and the left grip 4a is reduced. Before braking operation, a lower end of the pin 9 is in contact with an upper surface of a support plate 8a as shown in Fig. 6B, so that the pushing operation to the pin 9 is prohibited. The support plate 8a is fixed to the arm 5 and therefore when the brake lever 4e rotates to a certain position, the pin 9 and the support plate 8a are shifted from each other in position, so that the pushing operation to the pin 9 can be carried out. A rotation position of the brake lever 4e where the pin 9 can be pushed in can be adjusted as required.

The brake lock device 8 is provided at the left handle 4L including the brake lever 4e. In the motorcycle 10, the kick lever 301 and the brake lock device 8 are provided on the left side part of the vehicle body, which allows the engine 29 to be started readily by the kick starter 300.

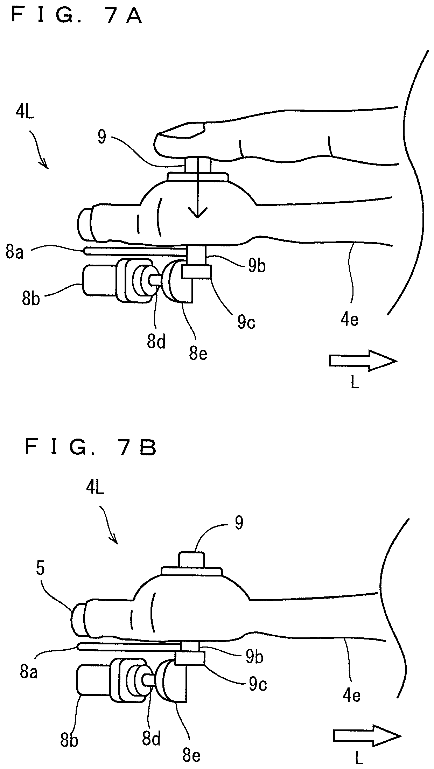

Fig. 7A is a view showing the state of how the driver carries out brake lock operation. Fig. 7B is a view showing the state of how the brake lever 4e and the pin 9 are fixed in a brake locked position.

When the pin 9 can be pushed in, the driver pushes the pin 9 downward as shown in Fig. 7A. When the pin 9 is pushed downward, the shaft 9b and the flange 9c at a lower part of the pin 9 are pushed out to the lower side of the brake lever 4e. The pin 9 is pushed until the flange 9c is positioned below the support plate 8a and then the driver releases the operation pressure to the brake lever 4e. The brake lever 4e does not return to the position before the braking operation. As shown in Fig. 7B, the flange 9c is hooked on the support plate 8a, so that the pin 9 is fixed in a brake locked position. The brake lever 4e is fixed in a closer position to the left grip 4a than the position before the braking operation. The flange 9c pushes the hinge lever 8e to the right (to the left on the surface of the sheet of Fig. 7B). In this way, a part of the switch lever 8d is pushed in the switch case 8b.

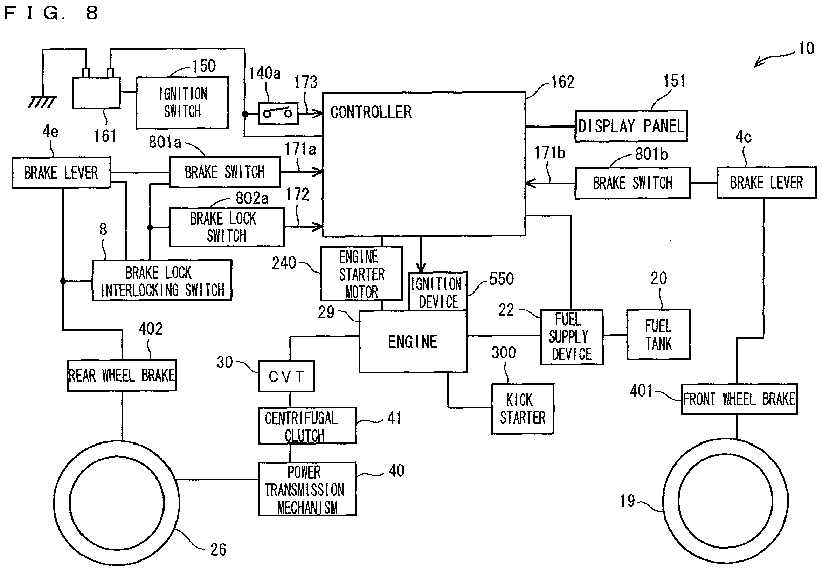

The pin 9 is fixed in a brake locked position, so that the rear wheel 26 is held in a braked state. As a part of the switch lever 8d is pushed into the switch case 8b, the brake lock switch 802a (shown in Fig.8) is turned on by the internal mechanism of the switch case 8b. When the brake lever 4e rotates in the direction of the arrow G and is positioned in a prescribed range, the brake switch 801a (shown in Fig.8) is turned on by the internal mechanism of the switch case 8b. In this way, according to the present preferred embodiment, the brake lock device 8 keeps the rear wheel 26 in a braked state.

When the pin 9 is fixed in a brake locked position and in contact with the hinge lever 8e, the driver turns the brake lever 4e further in the direction of the arrow G. By the operation, the flange 9c and the support plate 8a are unhooked from each other, so that the pin 9 is released from the fixed state in the brake locked position.

Fig. 8 is a control block diagram of the motorcycle 10. As shown in Fig. 8, the motorcycle 10 includes a main power supply 161 and a controller 162. The main power supply 161 is connected to the controller 162. When the driver turns on an ignition switch 150, power is supplied from the main power supply 161 to the controller 162. The ignition switch 150 is provided on the surface of the vehicle body cover 21 (shown in Fig. 1).

A brake signal 171a is input to the controller 162 from the brake switch 801a when the brake switch 801a is turned on. A brake lock signal 172 is input to the controller 162 based on the operation of the brake lever 4e and the operation of the brake lock device 8. A start signal 173 is input to the controller 162 based on the operation of the engine switch 140a. The controller 162 drives the engine starter motor 240 based on the start signal 173.

As shown in Fig. 8, the motorcycle 10 includes a front wheel brake 401 and a rear wheel brake 402. According to the present preferred embodiment, when the brake lever 4c is operated, the front wheel brake 401 is applied on the front wheel 19. When the brake lever 4e is operated, the rear wheel brake 402 is applied on the rear wheel 26. The brake may be applied on the front wheel 19 by the operation of the brake lever 4e. The brake may be applied on the rear wheel 26 by operating the brake lever 4c.

The arrangements of the front wheel brake 401 and the rear wheel brake 402 are not particularly limited. Each of the front wheel brake 401 and the rear wheel brake 402 may be a disk type brake including a disk rotor and a brake pad. Each of the front wheel brake 401 and the rear wheel brake 402 may be a drum type brake including a brake drum. The front wheel brake 401 and the rear wheel brake 402 may be different kinds of brakes from each other.

The front wheel brake 401 operates based on the operation of the brake lever 4c. The rear wheel brake 402 operates based on the operation of the brake lever 4e. The state of the brake switch 801b changes based on the operation of the brake lever 4c. The state of the brake switch 801a changes based on the operation of the brake lever 4e. When the brake switch 801b is turned on, a brake signal 171b is input to the controller 162. When the brake switch 801a is turned on, the brake signal 171a is input to the controller 162. As described above, the state of the brake lock switch 802a changes based on the operation of the brake lever 4e and the operation of the brake lock device 8. When the brake lock switch 802a is turned on, the brake lock signal 172 is input to the controller 162.

The driver operates the brake lever 4e and the pin 9 of the brake lock device 8, so that the rear wheel 26 is kept in a braked state. As described above, the brake lever 4e is rotated to a position close to the left grip 4a and locked in the state.

The controller 162 drives the engine starter motor 240 in response to the start signal 173. As the engine starter motor 240 is driven, the engine 29 is driven. The start of the engine 29 is also carried out by the kick starter 300. In this way, according to the present preferred embodiment, two methods of starting the engine 29 are prepared. One is to start the engine using the engine starter by operating the engine switch 140a and the other is to start the engine using the kick starter 300. The engine 29 may be started only by the kick starter 300.

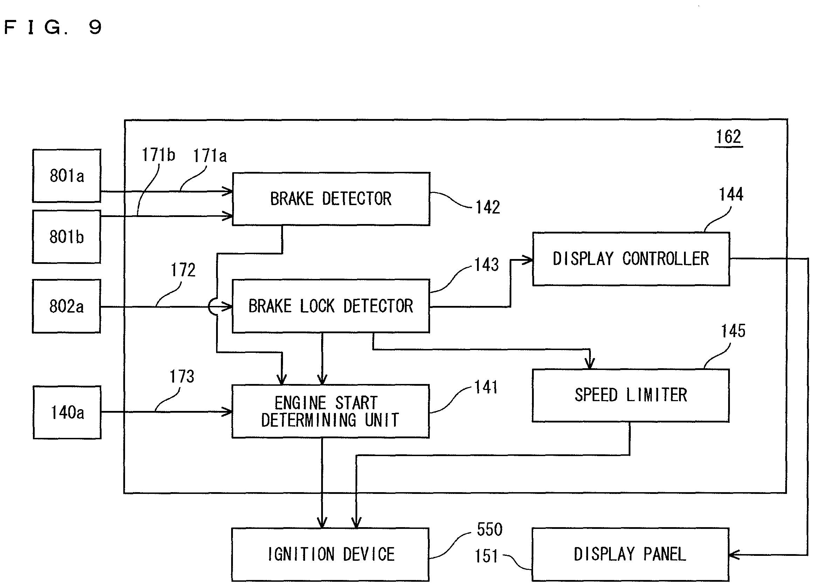

Fig. 9 is a functional block diagram of the controller 162. As shown in Fig. 9, the controller 162 includes an engine start determining unit 141, a brake detector 142, a brake lock detector 143, a display controller 144, and a speed limiter 145.

When the brake lock device 8 keeps the rear wheel 26 in a braked state, the brake lock switch 802a is turned on. When the brake lock switch 802a is in an on state, a brake lock signal 172 from the brake lock switch 802a is input to the brake lock detector 143. When the brake lock switch 802a is in an off state, the brake lock signal 172 is not input to the brake lock detector 143. When the brake lock signal 172 is input, the engine start determining unit 141 allows the engine 29 to be started by the kick starter 300. The engine start determining unit 141 does not allow the engine 29 to be started by the kick starter 300 when the brake lock signal 172 is not input. The brake lock detector 143 and the brake lock switch 802a according to the present preferred embodiment correspond to the brake lock detector according to the present invention.

When the brake lock signal 172 is not input, the engine start determining unit 141 controls so that the ignition device 550 does not spark. In this way, the engine 29 is prohibited from being driven. The engine start determining unit 141 may prohibit the driving of the engine 29 by stopping supplying fuel by the fuel supply device 22. The engine start determining unit 141 according to the present preferred embodiment corresponds to the engine start determining device according to the present invention.

The ignition device 550 has at least an ignition plug 55 (shown in Fig. 2). The fuel supply device 22 includes a space through which air and fuel necessary for fuel combustion pass. The fuel supply device 22 has a carburetor or an injector used to directly inject fuel.

The display controller 144 and the display panel 151 according to the present preferred embodiment correspond to the brake lock informing device according to the present invention. The display panel 151 informs that the braked state to the rear wheel 26 is locked by the brake lock device 8. The locked state by the brake lock device 8 may be informed by voice sound.

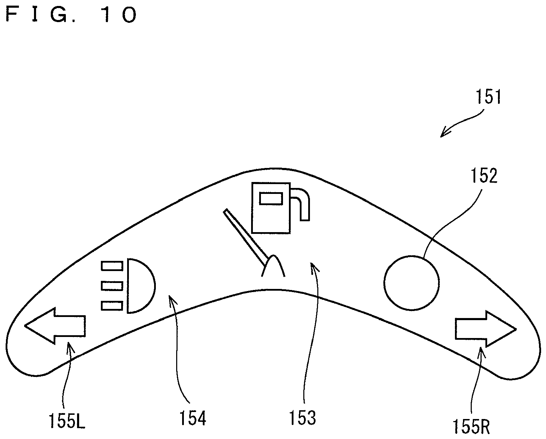

When the brake lock signal 172 is input to the brake lock detector 143, the display controller 144 switches the display content of the display panel 151. Fig. 10 is a view of the display content of the display panel 151. As shown in Fig. 10, the display panel 151 is provided with a brake lock lamp 152. As will be described, the brake lock lamp 152 is on when the main power supply 161 is on and the brake lock switch 802a is on.

The display panel 151 has a fuel meter 153, a high beam lamp 154, and left and right direction indicators 155L and 155R. The fuel meter 153 displays the remaining amount of fuel in the fuel tank 20 (shown in Fig. 8). The high beam lamp 154 is on when the illumination direction of the head light 14 (shown in Fig. 1) is arranged upward. The left and right direction indicators 155L and 155R flash in synchronization with the flashing of front and back flashers 15F and 15R (shown in Fig. 1). The display panel 151 is provided on an upper surface of the front cover 23 as shown in Fig. 1.

When the brake lock signal 172 is input to the brake lock detector 143, the speed limiter 145 limits the engine rotation speed of the engine 29. More specifically, the speed limiter 145 limits the rotation speed of the crankshaft 46. In other words, the speed limiter 145 limits the rotation speed of the crankshaft 46 to a prescribed rotation speed or less when the brake lock device 8 is in operation.

The speed limiter 145 reduces the number of ignition by the ignition device 550 and thus limits the rotation speed of the crankshaft 46. The speed limiter 145 may reduce the amount of fuel supplied from the fuel supply device 22. The speed limiter 145 and the ignition device 550 according to the present preferred embodiment correspond to the speed limiter according to the present invention. Alternatively, the speed limiter 145 and the fuel supply device 22 according to the present preferred embodiment correspond to the speed limiter according to the present invention.

When the engine switch 140a is turned on, the start signal 173 is input to the engine start determining unit 141 from the engine switch 140a. The engine start determining unit 141 prohibits the engine 29 from being started by the engine starter motor 240 (shown in Fig. 8) based on the brake signal 171a or 171b input by the brake detector 142 and the start signal 173. The brake detector 142 and the brake switch 801a according to the present preferred embodiment correspond to the brake detector according to the present invention. Alternatively, the brake detector 142 and the brake switch 801b according to the present preferred embodiment correspond to the brake detector according to the present invention.

The engine start determining unit 141 allows the engine 29 to be started by the engine starter motor 240 when the operation of the brake lever 4e or 4c is detected by the brake detector 142. The engine start determining unit 141 prohibits the start of the engine 29 by the engine starter motor 240 when the operation of both the brake levers 4e and 4c is not detected.

When the braking operation by the brake levers 4e and 4c is not detected by the brake detector 142, the engine start determining unit 141 prohibits sparking by the ignition device 550. The engine start determining unit 141 may stop the fuel supply by the fuel supply device 22 when braking operation by the brake levers 4e and 4c is not detected by the brake detector 142. When braking operation by the brake levers 4e and 4c is not detected by the brake detector 142, the engine start determining unit 141 may control the engine starter motor 240 so that the engine starter motor 240 is not driven.

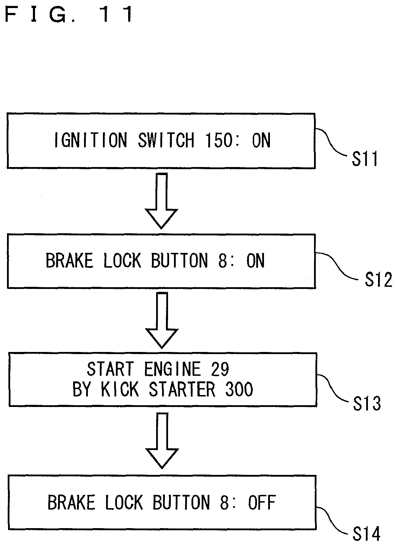

Fig. 11 is a view showing the procedure of how the engine 29 is started by the kick starter 300. Power starts to be supplied from the main power supply 161 to the controller 162 when the driver turns on the ignition switch 150 (step S11).

Then, the driver turns on the brake lock device 8 (step S12). When the brake lock device 8 is turned on, the brake lock switch 802a is turned on. When the brake lock switch 802a is turned on, the brake lock signal 172 is input to the brake lock detector 143. The brake lock device 8 may be turned on before the supply of power by the main power supply 161 is started.

The driver then starts the engine 29 using the kick starter 300 (step S13). According to the present preferred embodiment, when the ignition switch 150 is turned on and the brake lock switch 802a is in an off state, the engine 29 cannot be started by using the kick starter 300. In the procedure shown in Fig. 11, the brake lock switch 802a is on in step S12, and therefore the engine 29 is started by the operation of the kick starter 300.

The driver then releases the fixed state of the pin 9 of the brake lock device 8 (step S14). More specifically, the driver turns the brake lever 4e in the direction of the arrow G and thus releases the fixed state of the pin 9 in the brake locked position. When the brake lock device 8 is turned off, the brake lock switch 802a is turned off. When the brake lock device 8 is turned off, the braked state by the rear wheel brake 402 is released.

In steps S11 to S14 in Fig. 11, when the supply of power from the main power supply 161 is turned on and the brake lock switch 802a is in an on state, the brake lock lamp 152 (shown in Fig. 10) lights up. When the supply of power from the main power supply 161 is turned on and the brake lock switch 802a is in an off state, the brake lock lamp 152 is off.

When the brake lock switch 802a is in an on state and the supply of power from the main power supply 161 is off, the brake lock lamp 152 is off. When the brake lock device 8 is operated before the supply of power from the main power supply 161 is turned on, the brake lock lamp 152 starts to light up in response to the turning on of the supply of power from the main power supply 161. The brake lock lamp 152 continues to be on until the brake lock switch 802a is turned off in step S14.

When the brake lock device 8 is turned on after the supply of power from the main power supply 161 is started, the brake lock lamp 152 starts to light up when the brake lock device 8 is turned on. The brake lock lamp 152 continues to be on until the brake lock switch 802a is turned off in step S14.

In the motorcycle 10 according to the present preferred embodiment, when the supply of power from the main power supply 161 is turned on and the brake lock switch 802a is in an on state, the engine rotation speed of the engine is limited. The controller 162 limits the rotation speed of the crankshaft 46 of the engine 29 based on the brake lock signal 172.

When the brake lock switch 802a is in an on state before the supply of power from the main power supply 161 is started in step S11, the engine rotation speed is limited from the point when the supply of power is started. The engine rotation speed is limited until the brake lock switch 802a is turned off in step S14.

When the brake lock switch 802a is turned on after the supply of power from the main power switch 161 is turned on, the engine rotation speed is limited from the point when the brake lock switch 802a is turned on. The engine rotation speed is limited until the brake lock switch 802a is turned off.

It would be understood that the limitation of the engine rotation speed becomes effective substantially from the point when the engine 29 is started. The limitation of the engine rotation speed is started substantially from step S13 and continued till step S14. After the start of the engine 29, when the brake lock switch 802a is turned off, the limitation of the engine rotation speed is stopped. In this way, the motorcycle 10 can start and travel.

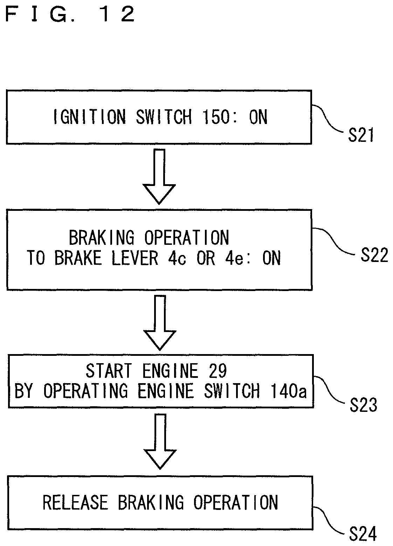

Fig. 12 is a diagram showing the procedure of how the engine is started by the engine starter. The driver turns on the ignition switch 150 (step S21). This starts the supply of power from the main power supply 161 to the controller 162.

The driver then carries out braking operation to the brake lever 4e or 4c (step S22). The brake switch 801a or the brake switch 801b is turned on in response to the braking operation. When the brake switch 801a is turned on, the brake signal 171a is input to the brake detector 142. When the brake switch 801b is turned on, the brake signal 171b is input to the brake detector 142. The braking operation to the brake lever 4c or 4e may be carried out before the supply of power from the main power supply 161 is started.

The driver then operates the engine switch 140a and starts the engine 29 (step S23). According to the present preferred embodiment, when the engine switch 140a is operated and the brake switches 801a and 801b are both in an off state, the start of the engine by the engine starter motor 240 is prohibited. In the procedure shown in Fig. 12, the braking operation is carried out in step S22, and therefore the engine 29 is started by the engine starter.

The driver then stops the braking operation (step S24). This turns off both the brake switches 801a and 801b.

When the operation of the brake lever 4c is released, the brake switch 801b is turned off, and the braked state by the front wheel brake 401 is released. When the operation of the brake lever 4e is released, the brake switch 801a is turned off state and the braked state by the rear wheel brake 402 is released. When the brake switch 801a and 801b is turned off, the motorcycle 10 can start and travel after the start of the engine 29.

As in the foregoing, the motorcycle 10 according to the present preferred embodiment includes the engine 29, the rear wheel 26, the rear wheel brake 402, the brake lever 4e, the brake lock device 8, the kick starter 300, and the controller 162. The controller 162 has the brake lock detector 143 and the engine start determining unit 141. The rear wheel brake 402 acts on the rear wheel 26 based on the operation of the brake lever 4e. The brake lock device 8 locks the rear wheel 26 in a braked state. The brake lock detector 143 detects the on/off state of the brake lock switch 802a and thus detects the locked state of the brake lock device 8. The kick starter 300 has the first shaft 302 coupled to the crankshaft 46 and the kick lever 301 coupled to the first shaft 302. The crankshaft 46 rotates based on the rotation of the kick lever 301, so that the engine 29 is driven. The engine start determining unit 141 allows the engine 29 to be started by the kick starter 300 when it is detected by the brake lock detector 143 that the brake is locked in a braked state. The engine start determining unit 141 prohibits the start of the engine 29 by the kick starter 300 when it is not detected by the brake lock detector 143 that the brake is locked in a braked state.

In the motorcycle 10 according to the present preferred embodiment, the start of the engine by the kick starter 300 is restricted by electrical control. The start of the engine 29 by the kick starter 300 can be restricted without being subject to the limitation of the layout and structure of the kick lever 301. The kick lever 301 can be provided in a position that allows the driver to easily carry out kicking operation.

The motorcycle 10 according to the present preferred embodiment includes the engine starter. The engine starter includes the engine starter motor 240 coupled to the crankshaft 46 and the engine switch 140a that commands the engine starter motor 240 to drive. The crankshaft 46 rotates based on the driving of the engine starter motor 240, which drives the engine 29. The controller 162 has the brake detector 142 that detects the braked state of the front wheel brake 401 or the rear wheel brake 402. The engine start determining unit 141 allows the engine 29 to be started by the engine starter when the braked state of the front wheel brake 401 or the rear wheel brake 402 is detected by the brake detector 142. The engine start determining unit 141 prohibits the engine 29 from being started by the engine starter when the brake detector 142 does not detect either the braked state of the front wheel brake 401 or the braked state of the rear wheel brake 402.

When the brake detector 142 detects the braked state of the front wheel brake 401 or the rear wheel brake 402, the start of the engine by the engine starter becomes enabled regardless of whether the brake lock detector 143 detects the brake locked state. According to the present preferred embodiment, the condition for starting the engine by the kick starter 300 and the condition for starting the engine by the engine starter are different. The starting conditions depending on the methods of starting the engine are set individually, so that operability comfortable for the driver can be provided.

The motorcycle 10 according to the present preferred embodiment further includes a brake lock informing device that informs that the brake is locked in a braked state by the brake lock device 8. The brake lock informing device includes the display controller 144 and the display panel 151. The driver of the motorcycle 10 can check the state of the brake lock device 8 with the display panel 151. The driver can check the state of the brake lock device 8 to smoothly start the engine.

The controller 162 according to the present preferred embodiment further has the speed limiter 145. The speed limiter 145 limits the rotation speed of the crankshaft 46 to a prescribed speed or less when the brake is locked in a braked state by the brake lock device 8. The rotation speed of the crankshaft 46 is limited by adjusting the spark timing of the ignition device 550. The rotation speed of the crankshaft 46 may be limited by adjusting the amount of fuel supplied by the fuel supply device 22. When the engine rotation speed is limited by reducing the amount of fuel supplied by the fuel supply device 22, the fuel consumption can be reduced.

According to the present preferred embodiment, the brake lock device 8 is used to keep the rear wheel brake 402 in a braked state. Alternatively, a dedicated parking brake may be used. The engine start using the kick starter may be allowed only when the dedicated parking brake is in operation.

## Claims

1. A motorcycle (10), comprising:
an engine (29);
a wheel (26) driven by the engine (29);
a first brake (402) that acts on the wheel (26);
a brake lock device (8) that locks the first brake (402) in a braked state;
a brake lock detector (143) that detects that the first brake (402) is locked in a braked state by the brake lock device (8);
a kick starter (300) that forces a crankshaft (46) of the engine (29) to rotate; and
an engine start determining device (141) that prohibits the engine (29) from being started when the operation of starting the engine is carried out by the kick starter (300) and the brake lock detector (143) does not detect that the first brake (402) is locked in a braked state.

2. The motorcycle (10) according to claim 1, further comprising:
an engine starter motor (240) that drives the engine (29);
an engine starter that drives the engine starter motor (240);
a second brake (401); and
a brake detector (142) that detects the braked state of the first and second brake (401, 402),
the engine start determining device (141) prohibiting the engine (29) from being started when the operation of starting the engine is carried out by the engine starter and the brake detector (142) does not detect the braked state both of the first and second brake (401, 402).

3. The motorcycle (10) according to claim 1, wherein the engine start determining device (141) allows the engine (29) to be driven when the operation of starting the engine is carried out by the kick starter (300) and the brake lock detector (143) detects that the first brake (402) is locked in a braked state.

4. The motorcycle (10) according to claim 2, wherein the engine start determining device (141) allows the engine (29) to be driven when the operation of starting the engine is carried out by the engine starter and the brake detector (142) detects the braked state at least one of the first and second brake (401, 402).

5. The motorcycle (10) according to claim 1, further comprising a brake lock informing device (144, 151) that informs that the first brake (402) is locked in a braked state by the brake lock device (8).

6. The motorcycle (10) according to claim 1, further comprising a speed limiter (145) that limits the engine rotation speed of the engine (29) to a prescribed speed or less while the first brake (402) is locked in a braked state by the brake lock device (8).

7. The motorcycle (10) according to claim 1, wherein the brake lock device (8) keeps a brake lever (4e) provided on a handle in a braked state.

8. The motorcycle (10) according to claim 7, wherein the kick starter (300) comprises a kick lever (301) provided on one of the left and right sides of the vehicle, and
the brake lock device (8) is provided on the handle on the same side as the side having the kick lever (301).

9. The motorcycle (10) according to claim 1, wherein the kick starter (300) comprises a kick lever (301), and
the kick lever (301) is arranged not to interfere with any part of the vehicle when it rotates.

10. The motorcycle (10) according to claim 9, further comprising a side stand (220), wherein
the kick lever (301) can rotate without interfering with the side stand (220) when the side stand (220) rotates downwardly to contact a road surface and the side stand (220) rotates upwardly to attain a stored state.

11. The motorcycle (10) according to claim 9, further comprising a main stand (200), wherein
the kick lever (301) can rotate without interfering with the main stand (200) when the main stand (200) rotates downwardly to contact a road surface and the main stand (200) rotates upwardly to attain a stored state.

## Patentansprüche

1. Ein Motorrad (10), das folgende Merkmale aufweist:
ein Triebwerk (29);
ein Rad (26), das durch das Triebwerk (29) angetrieben wird;
eine erste Bremse (402), die auf das Rad (26) einwirkt;
eine Bremssperrvorrichtung (8), die die erste Bremse (402) in einem Bremszustand sperrt;
einen Bremssperrdetektor (143), der erfasst, dass die erste Bremse (402) in einem Bremszustand durch die Bremssperrvorrichtung (8) gesperrt ist;
einen Kickstarter (300), der eine Kurbelwelle (46) des Triebwerks (29) zum Drehen treibt; und
eine Triebwerksstart-Bestimmungsvorrichtung (141), die verhindert, dass das Triebwerk (29) gestartet wird, wenn der Vorgang des Triebwerksstartens durch den Kickstarter (300) ausgeführt wird und der Bremssperrdetektor (143) nicht erfasst, dass die erste Bremse (402) in einem Bremszustand gesperrt ist.

2. Das Motorrad (10) gemäß Anspruch 1, das ferner folgende Merkmale aufweist:
einen Triebwerksstartermotor (240), der das Triebwerk (29) antreibt;
einen Triebwerksstarter, der den Triebwerksstartermotor (240) antreibt;
eine zweite Bremse (401) und
einen Bremsdetektor (142), der den Bremszustand der ersten und der zweiten Bremse (401, 402) erfasst,
wobei die Triebwerksstart-Bestimmungsvorrichtung (141) verhindert, dass das Triebwerk (29) gestartet wird, wenn der Vorgang des Triebwerksstartens durch den Triebwerksstarter ausgeführt wird und der Bremsdetektor (142) den Bremszustand sowohl der ersten als auch der zweiten Bremse (401, 402) nicht erfasst.

3. Das Motorrad (10) gemäß Anspruch 1, bei dem die Triebwerksstart-Bestimmungsvorrichtung (141) es zulässt, dass das Triebwerk (29) angetrieben wird, wenn der Vorgang des Triebwerksstartens durch den Kickstarter (300) ausgeführt wird und der Bremssperrdetektor (143) erfasst, dass die erste Bremse (402) in einem Bremszustand gesperrt ist.

4. Das Motorrad (10) gemäß Anspruch 2, bei dem die Triebwerksstart-Bestimmungsvorrichtung (141) es zulässt, dass das Triebwerk (29) angetrieben wird, wenn der Vorgang des Triebwerksstartens durch den Triebwerksstarter ausgeführt wird und der Bremsdetektor (142) den Bremszustand der ersten Bremse und/oder der zweiten Bremse (401, 402) erfasst.

5. Das Motorrad (10) gemäß Anspruch 1, das ferner eine Bremssperr-Informationsvorrichtung (144, 151) aufweist, die darüber informiert, dass die erste Bremse (402) in einem Bremszustand durch die Bremssperrvorrichtung (8) gesperrt ist.

6. Das Motorrad (10) gemäß Anspruch 1, das ferner einen Geschwindigkeitsbegrenzer (145) aufweist, der die Triebwerksdrehgeschwindigkeit des Triebwerks (29) auf eine vorgeschriebene Geschwindigkeit oder weniger beschränkt, während die erste Bremse (402) in einem Bremszustand durch die Bremssperrvorrichtung (8) gesperrt ist.

7. Das Motorrad (10) gemäß Anspruch 1, bei dem die Bremssperrvorrichtung (8) einen Bremshebel (4e), der auf einem Handgriff bereitgestellt ist, in einem Bremszustand hält.

8. Das Motorrad (10) gemäß Anspruch 7, bei dem der Kickstarter (300) einen Kickhebel (301) aufweist, der auf einer der linken und der rechten Seite des Fahrzeugs bereitgestellt ist, und
die Bremssperrvorrichtung (8) auf dem Handgriff auf derselben Seite wie die Seite mit dem Kickhebel (301) bereitgestellt ist.

9. Das Motorrad (10) gemäß Anspruch 1, bei dem der Kickstarter (300) einen Kickhebel (301) aufweist und
der Kickhebel (301) angeordnet ist, kein Teil des Fahrzeugs störend zu beeinflussen, wenn derselbe sich dreht.

10. Das Motorrad (10) gemäß Anspruch 9, das ferner einen Seitenständer (220) aufweist, wobei
der Kickhebel (301) sich drehen kann, ohne den Seitenständer (220) störend zu beeinflussen, wenn der Seitenständer (220) sich nach unten dreht, um mit einer Straßenoberfläche in Berührung zu gelangen, und der Seitenständer (220) sich nach oben dreht, um einen gespeicherten Zustand einzunehmen.

11. Das Motorrad (10) gemäß Anspruch 9, das ferner einen Hauptständer (200) aufweist, wobei
der Kickhebel (301) sich drehen kann, ohne den Hauptständer (200) störend zu beeinflussen, wenn der Hauptständer (200) sich nach unten dreht, um mit einer Straßenoberfläche in Berührung zu gelangen, und der Hauptständer (200) sich nach oben dreht, um einen gespeicherten Zustand einzunehmen.

## Revendications

1. Motocyclette (10), comprenant:
un moteur (29);
une roue (26) entraînée par le moteur (29);
un premier frein (402) qui agit sur la roue (26);
un dispositif de verrouillage de frein (8) qui verrouille le premier frein (402) dans un état freiné;
un détecteur de verrouillage de frein (143) qui détecte que le premier frein (402) est verrouillé dans un état freiné par le dispositif de verrouillage de frein (8);
un démarreur électrique (300) qui force un vilebrequin (46) du moteur (29) à tourner; et
un dispositif de détermination de démarrage de moteur (141) qui empêche le démarrage du moteur (29) lorsque l'opération de démarrage du moteur est effectuée par le démarreur électrique (300) et que le détecteur de verrouillage de frein (143) ne détecte pas que le premier frein (402) est verrouillé dans un état freiné.

2. Motocyclette (10) selon la revendication 1, comprenant par ailleurs:
un moteur de démarreur de moteur (240) qui entraîne le moteur (29);
un démarreur de moteur qui entraîne le moteur de démarreur de moteur (240);
un deuxième frein (401); et
un détecteur de frein (142) qui détecte l'état freiné des premier et deuxième freins (401, 402),
le dispositif de détermination de démarrage de moteur (141) empêchant le démarrage du moteur (29) lorsque l'opération de démarrage du moteur est effectuée par le démarreur de moteur et que le détecteur de freinage (142) ne détecte pas l'état freiné tant du premier que du deuxième frein (401, 402).

3. Motocyclette (10) selon la revendication 1, dans lequel le dispositif de détermination de démarrage de moteur (141) permet que le moteur (29) soit entraîné lorsque l'opération de démarrage du moteur est effectuée par le démarreur électrique (300) et que le détecteur de verrouillage de frein (143) détecte que le premier frein (402) est verrouillé dans un état freiné.

4. Motocyclette (10) selon la revendication 2, dans lequel le dispositif de détermination de démarrage de moteur (141) permet que le moteur (29) soit entraîné lorsque l'opération de démarrage du moteur est effectuée par le démarreur de moteur et que le détecteur de frein (142) détecte l'état freiné au moins de l'un parmi les premier et deuxième freins (401, 402).

5. Motocyclette (10) selon la revendication 1, comprenant par ailleurs un dispositif d'information de verrouillage de frein (144, 151) qui informe que le premier frein (402) est verrouillé dans un état freiné par le dispositif de verrouillage de frein (8).

6. Motocyclette (10) selon la revendication 1, comprenant par ailleurs un limiteur de vitesse (145) qui limite la vitesse de rotation de moteur (29) à une vitesse prescrite ou inférieure tandis que le premier frein (402) est verrouillé dans un état freiné par le dispositif de verrouillage de frein (8).

7. Motocyclette (10) selon la revendication 1, dans lequel le dispositif de verrouillage de frein (8) maintient un levier de frein (4e) prévu sur une poignée dans un état freiné.

8. Motocyclette (10) selon la revendication 7, dans lequel le démarreur électrique (300) comprend un levier de démarrage (301) prévu sur l'un des côtés gauche et droit du véhicule, et
le dispositif de verrouillage de frein (8) est prévu sur la poignée du même côté que le côté présentant le levier de démarrage (301).

9. Motocyclette (10) selon la revendication 1, dans lequel le démarreur (300) comprend un levier de démarrage (301), et
le levier de démarrage (301) est disposé de manière à ne pas interférer avec toute partie du véhicule lorsqu'il tourne.

10. Motocyclette (10) selon la revendication 9, comprenant par ailleurs une béquille latérale (220), dans laquelle
le levier de démarrage (301) peut tourner sans interférer avec la béquille latérale (220) lorsque la béquille latérale (220) tourne vers le bas pour entrer en contact avec une surface de la route et que la béquille latérale (220) tourne vers le haut pour atteindre un état rabattu.

11. Motocyclette (10) selon la revendication 9, comprenant par ailleurs un support principal (200), dans laquelle
le levier de démarrage (301) peut tourner sans interférer avec le support principal (200) lorsque le support principal (200) tourne vers le bas pour entrer en contact avec une surface de la route et que le support principal (200) tourne vers le haut pour atteindre un état rabattu.
